(19) Europäisches Patentamt
European Patent Office
Office européen des brevets

(11) Veröffentlichungsnummer : **0 349 845 B1**

# (12) EUROPÄISCHE PATENTSCHRIFT

(45) Veröffentlichungstag der Patentschrift : **27.11.91 Patentblatt 91/48**

(51) Int. Cl.$^5$ : **C08L 27/06**, // (C08L27/06, 51:08)

(21) Anmeldenummer : **89111361.5**

(22) Anmeldetag : **22.06.89**

## (54) Tieftemperaturzähe PVC-Silikonkautschuk-Formmassen.

(30) Priorität : **05.07.88 DE 3822667**

(43) Veröffentlichungstag der Anmeldung : **10.01.90 Patentblatt 90/02**

(45) Bekanntmachung des Hinweises auf die Patenterteilung : **27.11.91 Patentblatt 91/48**

(84) Benannte Vertragsstaaten : **DE FR GB IT**

(56) Entgegenhaltungen : **EP-A- 0 246 537**

(73) Patentinhaber : **BAYER AG**
**W-5090 Leverkusen 1 Bayerwerk (DE)**

(72) Erfinder : **Lindner, Christian, Dr.**
**Riehler Strasse 200**
**W-5000 Köln 60 (DE)**
Erfinder : **Damrath, Volker, Dr.**
**Dierath 26**
**W-5093 Burscheid (DE)**
Erfinder : **Piejko, Karl-Erwin, Dr.**
**Unterscheider Weg 7a**
**W-5060 Bergisch Gladbach 2 (DE)**
Erfinder : **Ott, Karl-Heinz, Dr.**
**Paul-Klee-Strasse 54**
**W-5090 Leverkusen 1 (DE)**

EP 0 349 845 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft thermoplastische PVC-Formmassen, die speziell aufgebaute Silikonpfropfkautschuke enthalten. Diese Thermoplastformmassen weisen eine hervorragende Kombination von Eigenschaften wie Raumtemperatur — Schlagzähigkeit, Tieftemperaturschlagzähigkeit, bei besonders guter Alterungsbeständigkeit gegen Licht, Feuchtigkeit und Wärme, auf.

Polyvinylchlorid (PVC) wird bekanntlich durch Zusatz von Pfropfkautschuken in seiner Schlagzähigkeit und Wärmeformbeständigkeit verbessert. Daher eignet es sich zur Abmischung mit ABS- und MBS-Pfropfpolymerisaten (Dienkautschukpfropfpolymerisate) oder Pfropfpolymerisaten auf Basis von Alkylacrylatkautschuken, Ethylen-Vinylacetat-Copolymerkautschuken oder Ethylen-Propylen-Copolymerkautschuken. Jedoch kann deren Alterungsbeständigkeit (Bewitterungsbeständigkeit) unzureichend sein. Die genannten Pfropfkautschukpolymerisate können eine nicht zufriedenstellende Tieftemperaturzähigkeit aufweisen.

Silikonpfropfkautschuke, die ein besonders gutes Tieftemperaturverhalten aufweisen, sind an und für sich bekannt. Sie können als modifizierende Komponente in PVC-Formmassen nur bedingt eingearbeitet werden, da bekanntlich durch Abmischung mit diesen PVC-Massen hoher Zähigkeit, hoher Steifigkeit und guter Wärmeformbeständigkeit nur erschwert hergestellt werden können.

Es wurde nun gefunden, daß Silikonpfropfkautschuke mit teilchenförmiger Struktur als geeignete Modifikatoren für PVC verwendet werden können, wenn die teilchenförmige Silikonkautschukkomponente der Pfropfpolymerisate mit geringen Mengen eines vernetzten Alkylacrylatkautschuks ummantelt wird und/oder auf den Silikonkautschukteilchen bestimmte Anteile des Alkylacrylatkautschuks angereichert und fixiert werden, bevor man harzbildende Vinylmonomere auf die Kautschukteilchen aufpfropft. Aus EP-A-246537 ist bekannt, dass man kann die Pfropfpolymerisate mit Kautschuk modifizierten Kunststoffen vermischen z.B. mit ABS oder mit Acrylatenkautschuk modifizierten Harzen ("ASA Harzen").

Die Formmassen im Sinne der Erfindung besitzen vorteilhafte Eigenschaften wie gute Wärmeformbeständigkeit, gute Tieftemperaturzähigkeit, hohe Verarbeitungsstabilität, hochwertige Formkörperoberflächenbeschaffenheit. Sie können in besonders wirtschaftlichen Verarbeitungscycluszeiten verarbeitet werden.

Gegenstand der Erfindung sind somit thermoplastische Formmassen aus Polyvinylchlorid und einem teilchenförmigen Pfropfpolymerisat aus

a) einem Kern aus einem vernetzten Silikonkautschuk,
b) einer ersten (inneren) Hülle aus einem vernetzten Acrylatkautschuk, und
c) einer zweiten (äußeren) Hülle aus einem Polymerisat oder Copolymerisat aus harzbildenden Monomeren.

Bevorzugt sind thermoplastische Formmassen, in denen das Gewichtsverhältnis von (a) : (b) = 90 : 10 bis 40 : 60 ist.

Die Pfropfpolymerisate haben eine mittlere Teilchengröße ($d_{50}$) von 0,08 bis 0,6 μm (Durchmesser).

Das Harzpolymerisat der Hülle (c) ist ein Polymerisat oder Copolymerisat von Monomeren aus der Reihe Styrol, Acrylnitril, α-Methylstyrol, Alkylmethacrylat, Alkylacrylat.

Das Material des Kernes (a) ist ein vernetzter Silikonkautschuk und enthält Einheiten der Formeln (Ia-Id)

| $R_2SiO$, | $RSiO_{3/2}$, | $R_3SiO_{1/2}$, | $SiO_2$, |
|---|---|---|---|
| Ia | Ib | Ic | Id |

in welchen

R für einen einwertigen organischen Rest mit 1 bis 18 C-Aomen steht.

Auf 100 Mol Siloxaneinheiten der Formel $R_2SiO$ kommen 0 bis 10 Mol Einheiten der Formel $RSiO_{3/2}$, 0 bis 1,5 Mol Einheiten $R_3SiO_{1/2}$ und/oder 0 bis 3 Mol Einheiten der Formel $SiO_2$.

R kann ein einwertiger gesättigter Kohlenwasserstoffrest mit 1 bis 18 Kohlenstoffatomen, vorzugsweise Methyl, Ethyl, ein $C_6$-$C_{24}$-Arylrest, vorzugsweise Phenylrest, ein $C_1$-$C_{10}$-Alkoxy-Rest oder ein Vinyl- oder γ-Mercaptopropylrest sein. Vorzugsweise sind mindestens 80% aller Reste R Methyl. Besonders bevorzugt sind Kombinationen aus Methyl- und Ethyl-Resten bei den Formeln Ia-Id.

Die erste innere Hülle (b) stellt einen vernetzten Acrylatkautschuk dar. Sie ist bevorzugt ein vernetztes Polymerisat aus Acrylsäurealkylestern, gegebenenfalls in Mischung mit bis zu 40 Gew.-% anderen Vinylmonomeren. Geeignete polymerisierbare Acrylsäureester sind z.B. gegebenenfalls substituierte $C_1$-$C_8$-Alkylester wie Methyl-, Ethyl-, Butyl-, Octyl- und 2-Ethylhexylester, Halogenalkylester, bevorzugt $C_1$-$C_8$-Halogenalkylester wie Chlorethylacrylat. Sie können einzeln oder in Mischung eingesetzt werden. Mindestens ein unsubstituierter Alkylester ist vorzugsweise im Gemisch vorhanden. Sie können durch Zusatz von polyfunktionellen Monomeren bei der Copolymerisation vernetzt werden, z.B. durch Zusatz von Estern von ungesättigten Carbonsäuren mit einem Polyol (vorzugsweise mit 2 bis 20 Kohlenstoffatomen in der Estergruppe) wie Ethylenglykoldimethylacrylat, Ester einer mehrbasischen Carbonsäure mit einem ungesättigten Alkohol (vorzugsweise 8 bis 30 Kohlenstoffatome im Esterrest), wie Triallylcyanurat, Triallylisocyanurat ; Divinylverbindungen wie Divinylbenzol ; Estern ungesättigter Carbonsäuren mit ungesättigten Alkoholen (bevorzugt 6 bis 12 Kohlenstoffatome im Esterrest), wie Allylmethacrylat ; Phosphorsäureestern, beispielsweise Triallylphosphat und 1,3,5-Triacryloyl-hexahydro-s-triazin. Besonders bevorzugte polyfunktionelle Monomere sind Triallylcyanurat, Triallylisocyanurat, Triallylphosphat, Allylmethacrylat.

Zur Vernetzung werden bevorzugt 0,05 bis 5,0 Gew.-% polyfunktionelle Monomere, bezogen auf die Masse der ersten, inneren Hülle (b), eingesetzt. Das Elastomer dieser Hülle (b) kann zusätzlich noch ein oder mehrere copolymerisierbare Monomere vom Vinyl- oder Vinylidentyp einpolymerisiert enthalten, z.B. Methylmethacrylat, Butylmethacrylat, Acrylnitril, Styrol, α-Methylstyrol, Acrylamide, Vinylalkylether. Dieser Comonomere können in Mengen bis zu 40 Gew.-%, bezogen auf die Masse des Polymerisats (b) einpolymerisiert werden.

Die zweite, äußere Hülle (c) ist ein pfropfpolymerisiertes Polymerisat aus harzbildenden α,β-ungesättigten, radikalisch polymerisierbaren Monomeren, bevorzugt aus der Reihe α-Methylstyrol, Styrol, p-Methylstyrol, Halogenstyrol, Acrylnitril, Methacrylnitril, Alkylmethacrylate mit 1 bis 8 C-Atomen im Alkoholteil, Maleinsäurederivate, insbesondere Maleinimide, Vinylacetat, Vinylchlorid, Vinylidenfluorid. Besonders bevorzugt sind Copolymerisate aus wenigstens zwei Monomeren aus der Reihe Styrol, α-Methylstyrol, Acrylnitril, Alkylmethacrylat und Alkylacrylat.

Die erfindungsgemäß geeigneten Pfropfpolymerisate können wie folgt hergestellt werden :

In einer ersten Stufe wird eine Emulsion des Kernmaterials (a) hergestellt :

Die Herstellung einer Emulsion eines langkettigen, OH-terminierten Silikonöls durch Emulsionspolymerisation ist bekannt (z.B. US-PS 2891910, GB-PS 1024024). Bevorzugt wird gemäß der britischen Patentschrift eine Alkylbenzolsulfonsäure eingesetzt, welche Emulgator und Polymerisationskatalysator in einem sein kann. Nach der Polymerisation wird die Säure neutralisiert. Die Emulgiermittelkonzentration kann gering gehalten werden. Anstelle der genannten Alkylbenzolsulfonsäuren können auch n-Alkylsulfonsäuren eingesetzt werden. Es ist weiterhin möglich, neben der katalytisch wirksamen Sulfonsäure auch zusätzlich andere Emulgiermittel als Co-Emulgatoren einzusetzen.

Es können nichtionische oder anionische Co-Emulgatoren zugesetzt werden. Als anionische Co-Emulgatoren kommen z.B. insbesondere Salze der obengenannten n-Alkyl- oder Alkylbenzolsulfonsäuren in Frage. Nichtionogene Co-Emulgatoren sind z.B. Polyoxyethylenderivate von Fettalkoholen, Fettsäuren und dergl.. Beispiele für derartige Emulgiermittel sind POE (3)-Laurylalkohol (POE = Polyoxyxethylen (x) mit x = Polymerisationsgrad) POE (2)-Oleylalkohol, POE (7)-Nonylphenol oder POE (10)-Stearat. Die Schreibweise POE (3)-Laurylalkohol bedeutet, daß an ein Molekül Laurylalkohol 3 Einheiten Ethylenoxid addiert worden sind, wobei die Zahl 3 einen Mittelwert darstellt.

Silikonöle, die durch Emulsionspolymerisation in Anwesenheit von nichtionogenen Co-Emulgatoren hergestellt worden sind, können ein niedrigeres Molekulargewicht haben als solche, die ohne Verwendung eines Co-Emulgators hergestellt wurden. Eine Steuerung des Molekulargewichts des durch Emulsionspolymerisation hergestellten OH-terminierten Silikonöls kann z.B. über die Herstellungstemperatur erfolgen (z.B. J. Polymer Sci. Part C, 27 pp 27-34 (1969)).

Der Einbau der obengenannten zusätzlichen Gruppen in das Silikoncopolymer kann durch Reaktion in Anwesenheit geeigneter substituierter Siloxanoligomerer erfolgen. Geeignete Ausgangsoligomere sind z.B. Tetramethyltetravinylcyclotetrasiloxan oder γ-Mercaptopropylmethyldimethoxysilan oder dessen Hydrolysat.

Diese funktionellen Oligomere können dem Basisoligomer zur Copolymerisation in den gewünschten Mengen beigefügt werden.

Analog kann auch der Einbau längerkettiger Alkylreste R, wie z.B. Ethyl-, Propyl- bzw. der Einbau von Phenylgruppen erreicht werden.

Die Silikonpfropfgrundlage sollte teilweise z.B. durch Vernetzung bewirkende Silane oder Vinyl- und SH-Gruppen vernetzt sein.

Bevorzugt sind Silikonpfropfgrundlagen mit Gelgehalten von größer 75 Gew.-%, gemessen in Toluol bei Raumtemperatur. Der Gelgehalt kann als Maß für die Vernetzung dienen.

Der Einbau von Verzweigungen oder Vernetzungen kann durch Zugabe von z.B. Tetraethoxysilan oder

eines Silans der Formel (II)

$$RSiX_3 \quad (II),$$

in welcher

X für eine hydrolysierbare Gruppe wie ein $C_1$-$C_{10}$-Alkoxyrest und
R für die bei Formel I angegebene Bedeutung, bevorzugt Methyl, Phenyl steht,

erfolgen.

Insbesondere bevorzugt sind Tetraoxysilan, Methyltrimethoxysilan oder Phenyltrimethoxysilan.

In der zweiten Stufe des erfindungsgemäßen Verfahrens wird in Gegenwart des Silikonkautschuklatex der ersten Stufe, durch Emulsionspolymerisation der Acrylatkautschuk für die erste Hülle (b) hergestellt. Die Monomeren (Hauptbestandteil wenigstens ein Acrylat) werden in dem Latex emulgiert und in an sich bekannter Weise an radikalbildende Initiatoren polymerisiert. Der Acrylatkautschuk polymerisiert auf den Silikonkautschuk. Er wird durch Mitverwendung polyfunktioneller Monomerer bereits bei der Herstellung vernetzt.

Bei dieser Pfropfpolymerisation der ersten Hülle (b) sollte vorzugsweise die Bildung neuer Teilchen möglichst vollständig unterbunden werden. Dies kann erreicht werden, wenn z.B. ein Emulsionsstabilisator in zur Oberflächenbedeckung der Teilchen ausreichender Menge vorhanden ist. Die Größe dieser Teilchen kann durch die Reaktionsführung in weiten Grenzen variiert werden. Verwendet man als Kern (a) z.B. einen agglomerierten Latex um große Teilchen zu erhalten, so können diese mehrere Silikonkautschukpartikel enthalten.

Nach Beendigung der Pfropfpolymerisation des Acrylatkautschuks wird auf den erhaltenen Latex ein Vinylmonomer oder ein Gemisch aus Vinylmonomeren in Emulsion polymerisiert. Dabei bilden sich die erfindungsgemäßen Pfropfpolymerisate unter Ausbildung der zweiten Hülle (c). Bei dieser an sich bekannten Pfropfpolymerisation, die z.B. in Gegenwart von Radikalstartern, z.B. wasserlöslichen Initiatoren, Emulgatoren oder Komplexbildnern, Pfropfaktivatoren, sowie Reglern durchgeführt werden kann, bilden sich im allgemeinen neben dem Pfropfpolymerisat im bestimmten Ausmaß freie Polymerisate bzw. Copolymerisate der die zweite Hülle (c) bildenden Monomeren. Die Menge dieses ungepfropften Polymerisats kann durch den Pfropfgrad bzw. die Pfropfausbeute charakterisiert werden. Sie hängt ab u.a. von den Polymerisationsbedingungen, der Zusammensetzung der ersten Hülle (b), der Größe der zu pfropfenden Teilchen, der Menge an gepfropftem Acrylatkautschuk.

"Pfropfpolymerisat" im Sinne der Erfindung ist das durch Polymerisation von Vinylmonomeren in Gegenwart des Kautschuklatex erhaltene Produkt, das Gemisch aus Pfropfpolymerisat und freiem Copolymerisat der Pfropfmonomeren.

Die so hergestellten Pfropfpolymerisate können nach bekannten Verfahren aufgearbeitet werden. z.B. durch Koagulation der Latices mit Elektrolyten (Salze, Säuren oder Gemische davon). Sie können anschließend gereinigt und getrocknet werden.

Vinylchloridpolymerisate A im Sinne der Erfindung sind vorzugsweise Polyvinylchlorid, Copolymerisate des Vinylchlorids mit bis zu 50 Gew.-% copolymerisierbaren Verbindungen, vorzugsweise mit bis zu 20 Gew.-% copolymerisierbaren Verbindungen, sowie Pfropfpolymerisate von Vinylchlorid auf Ethylen-Vinylacetat-Copolymerisaten (vorzugsweise mit Vinylacetatgehalten $\leq$ 50 Gew.-%).

Mit Vinylchlorid copolymerisierbare Verbindungen sind z.B. Vinylester mit 1 bis 8 C-Atomen im Alkylrest der Carbonsäure, Vinylether mit 3 bis 7 C-Atomen, Maleinsäureanhydrid, Halbester und Diester der Maleinsäure mit aliphatischen Alkoholen mit 1 bis 8 C-Atomen im Alkoholrest.

Die erfindungsgemäß geeigneten Vinylchloridpolymerisate können nach bekannten Verfahren hergestellt werden, z.B. durch Emulsions-, Suspensions-, bzw. Masse-Polymerisation.

Die erfindungsgemäßen Formmassen lassen sich nach bekannten Verfahren der Compoundiertechnik herstellen, beispielsweise durch Vermischen des PVC mit dem Pfropfpolymerisat in Knetern, Schnecken, Walzen usw.

Die erfindungsgemäßen Formmassen können nach üblichen Methoden der Polyvinylchloridverarbeitung zu Formkörpern verarbeitet werden, beispielsweise durch Spritzguß, Extrusion, Hohlkörperblasen, Tiefziehen, Kalandrieren.

Die erfindungsgemäßen Formmassen lassen sich mit bekannten PVC-Weichmachern, Gleitmitteln, Pigmenten vernetzen und thermoplastisch verarbeiten. Sie können mit anderen thermoplastischen Vinylmonomerharzen abgemischt werden, z.B. mit SAN, PMMA, $\alpha$-Methylstyrolcopolymerisatharzen, mit Kautschuken wie chloriertem Polyethylen oder NBR, usw.

Die Pfropfkautschukteilchengrößen sind $d_{50}$-Werte (zur Definition siehe Ultrazentrifugen-Messungen nach W. Scholtan, H. Lange, Kolloidz. und Z. Polymere 250 (1972) 783-796).

Beispiele

1.) Herstellung einer Silikonemulsion

1.1.) 38,4 Gew.-Teile Octamethylcyclotetrasiloxan, 1,2 Gew.-Teile Tetramethyltetravinylcyclotetrasiloxan und 0,2 Gew.-Teile Tetraethoxysilan werden miteinander verrührt. 0,5 Gew.-Teile Dodecylbenzolsulfonsäure werden zugeführt, anschließend 70 Gew.-Teile Wasser innerhalb 1 Stunde zugegeben. Dabei wird intensiv gerührt. Die Voremulsion wird mit Hilfe einer Hochdruckemulgiermaschine 2 x bei 200 bar homogenisiert. Man gibt weitere 0,5 Gew.-Teile Dodecylbenzolsulfonsäure hinzu. Die Emulsion wird 2 h bei 850°C und anschließend 36 h bei Raumtemperatur gerührt. Neutralisiert wird mit Hilfe von 5 n-NaOH. Es resultiert eine stabile Emulsion mit einem Feststoffgehalt von ca. 36%. Das Polymer besitzt einen Gelgehalt von 82 Gew.-%, gemessen in Toluol.

2.) Herstellung eines mit Acrylatkautschuk dotierten Silikonkautschuks

2.1.) In einem Reaktor werden vorgelegt :

2500 Gew.-Teile des Latex 1.1.)
228 Gew.-Teile Wasser.

Bei 70°C gibt man eine Lösung von 3 Gew.-Teilen Kaliumperoxidisulfat in 100 Gew.-Teile Wasser in den Reaktor ein.

Anschließend werden folgende Lösungen innerhalb von 5 Stunden bei 70°C in den Reaktor eindosiert :

Lösung 1 : 387 Gew.-Teile n-Butylacrylat
4 Gew.-Teile Triallylcyanurat
Lösung 2 : 500 Gew.-Teile Wasser
10 Gew.-Teile Na-Salz von $C_{14}$-$C_{18}$-Alkylsulfonsäuren

Danach wird die Polymerisation innerhalb von 4 Stunden bei 70°C auspolymerisiert. Der gebildete Latex enthält das Polymerisat in einer Konzentration von 35 Gew.-%. Das Polymer besitzt einen Gelgehalt von 92 Gew.-%, gemessen in Toluol, und besteht aus 70 Gew.-% Silikonkautschuk und 30 Gew.-% Acrylatkautschuk. Der Latex besitzt eine mittlere Teilchengröße ($d_{50}$) von 0,25 µm.

3.) Erfindungsgemäße Pfropfpolymerisate

In einem Reaktor werden vorgelegt :
3700 Gew.-Teile Latex 2.1.)
200 Gew.-Teile Wasser.

Nach Initiierung mittels einer Lösung von 3,0 Gew.-Teilen Kaliumperoxidisulfat in 150 Gew.-Teilen Wasser bei 70°C werden folgende Lösungen in den Reaktor innerhalb von 4 Stunden gleichmäßig eingespeist :

Lösung 1 : 555 Gew.-Teile Monomer
Lösung 2 : 800 Gew.-Teile Wasser
15 Gew.-Teile Na-Salz von $C_{14}$-$C_{18}$-Alkylsulfonsäuren

Anschließend polymerisiert man innerhalb von 4 Stunden bei 70°C bis 75°C aus. Es resultieren Latices mit Feststoffgehalten von ca. 34 Gew.-%.

Es wurden folgende Produkte hergestellt :

| Produkt | Monomer (Gew.-Teile) |
|---|---|
| 3.1 | 400 Styrol<br>155 Acrylnitril |
| 3.2 | 500 Methylmethacrylat<br>50 n-Butylacrylat |

4.) Vergleichspfropfpolymerisate

4.1.) Ein Acrylatpfropfkautschuk bestehend aus 30 Gew.-Teilen einer pfropfpolymerisierten Mischung aus 90 Gew.-% Methylmethacrylat und 10 Gew.-% n-Butylacrylat auf 70 Gew.-Teilen einer vernetzten Alkylacrylatkautschukgrundlage einer mittleren Teilchengröße von 0,22 µm ($d_{50}$)-Wert). Solche Polymerisate sind bekannt.

4.2.) Ein kommerzieller PVC-Modifikator der Fa. "Rohm + Haas" Acryloid KM 334®, auf Acrylatkautschukbasis.

4.3.) Beispiel 3.1 wird wiederholt unter Fortlassung der Anteile aus 2.1 (Anteile (b)) :

In einem Reaktor werden vorgelegt :
3600 Gew.-Teile Latex 1.1.)
200 Gew.-Teile Wasser

Nach Initiierung mittels einer Lösung aus 3,0 Gew.-Teilen Kaliumperoxidisulfat in 150 Gew.-Teile Wasser bei 70°C werden folgende Lösungen in den Reaktor in 4 Stunden gleichmäßig eindosiert :

Lösung 1 : 400 Gew.-Teile Styrol
155 Gew.-Teile Acrylnitril
Lösung 2 : 800 Gew.-Teile Wasser
15 Gew.Teile Na-Salz von $C_{14}$-$C_{18}$-Alkysulfonsäuren

Anschließend polymerisiert man 4 Stunden bei 70°C bis 75°C aus. Es resultiert ein Latex mit Feststoffgehalten von ca. 34 Gew.-%.

5.) Die Isolierung der Pfropfpolymerisate 3.1.), 3.2.), 4.3.) erfolgt durch Koagulation der Pfropfpolymeremulsionen mittels $MgSO_4$-Lösung im Temperaturbereich von 70 bis 95°C, Filtration, Waschen mit Wasser und Trocknung zu einem Pulver.

6.) Formmasseneigenschaften

Zur Herstellung der in Tabelle 1 beschriebenen Formmassen werden Polyvinylchlorid (K-Wert 70) mit unterschiedlichen Mengen verschiedener Produkte kombiniert. Als notwendiger Stabilisator- und Gleitmittelzusatz werden in jedem Fall 2 Gew.-% Ba/Cd-Laurat (fest) und 0,2 Gew.-% Esterwachs zugesetzt. Die Formmassen werden auf einem Mischwalzwerk 10 Minuten bei 180°C homogenisiert und bei 190°C zu Prüfkörpern verpreßt.

**Tabelle 1: Formmasseneigenschaften**

| Nr. | PVC Gew.Tl. | Pfropfpolymerisat Gew.Tl. | Kugeldruckhärte MPA, 30" DIN 53 456 | Kerbschlagzähigkeit ($kJ/m^2$) DIN 53 453 | | |
|---|---|---|---|---|---|---|
| | | | | RT | $-20^0$ C | $-40^0$ C |
| 6.1 | 94 | 6 (3.1) | 114 | 10 | 7 | 6 |
| 6.2 | 94 | 6 (3.2) | 110 | 11 | 8 | 6 |
| 6.3 | 94+) | 6 (4.1) | 105 | 8 | 3 | 3 |
| 6.4 | 94+) | 6 (4.2) | 103 | 9 | 4 | 3 |
| 6.5 | 94+) | 6 (4.3) | 102 | 4 | 3 | 2 |
| 6.6 | 92 | 8 (3.1) | 102 | 13 | 9 | 8 |
| 6.7 | 92 | 8 (3.2) | 99 | 13 | 9 | 8 |
| 6.8 | 92+) | 8 (4.1) | 96 | 12 | 3 | 3 |
| 6.9 | 92+) | 8 (4.2) | 97 | 12 | 4 | 3 |
| 6.10 | 92+) | 8 (4.3) | 98 | 5 | 3 | 2 |
| 6.11 | 90 | 10 (3.1) | 114 | 37 | 11 | 9 |
| 6.12 | 90 | 10 (3.2) | 98 | 38 | 10 | 8 |
| 6.13 | 90+) | 10 (4.1) | 95 | 36 | 4 | 3 |
| 6.14 | 90+) | 10 (4.2) | 96 | 37 | 5 | 3 |
| 6.15 | 90+) | 10 (4.3) | 97 | 18 | 4 | 3 |

+) Vergleichsbeispiele

## Patentansprüche

1. Thermoplastische Formmassen aus Polyvinylchlorid und einem teilchenförmigen Pfropfpolymerisat aus

a) einem Kern aus einem vernetzten Silikonkautschuk,
b) einer ersten (inneren) Hülle aus einem vernetzten Acrylatkautschuk, und
c) einer zweiten (äußeren) Hülle aus einem Polymerisat oder Copolymerisat aus harzbildenden Monomeren.

2. Thermoplastische Formmassen nach Anspruch 1, in denen das Gewichtsverhältnis von (a) : (b) 90 : 10 bis 40 : 60 ist.

3. Verwendung von Formmassen nach Anspruch 1 zur Herstellung von geformten Körpern.

## Claims

1. Thermoplastic moulding compounds of polyvinyl chloride and a particulate graft polymer of

a) a core of a crosslinked silicone rubber,
b) a first (inner) shell of a crosslinked acrylate rubber and
c) a second (outer) shell of a polymer or copolymer of resin-forming monomers.

2. Thermoplastic moulding compounds as claimed in claim 1 in which the ratio by weight of (a) to (b) is from 90 : 10 to 40 : 60.

3. The use of the moulding compounds claimed in claim 1 for the production of mouldings.

## Revendications

1. Matières à mouler thermoplastiques formées d'un polymère de chlorure de vinyle et d'un polymérisat greffé en particules constitué

a) d'un noyau d'un caoutchouc de silicone réticulé,
b) d'une première enveloppe (interne) d'un caoutchouc d'acrylate réticulé, et
c) d'une seconde enveloppe (externe) d'un polymérisat ou copolymérisat de monomères formant une résine.

2. Matières à mouler thermoplastiques suivant la revendication 1, dans lesquelles le rapport en poids de (a) : (b) a une valeur de 90 : 10 à 40 : 60.

3. Utilisation de matières à mouler suivant la revendication 1 pour la fabrication de corps moulés.